# EUROPÄISCHE PATENTSCHRIFT

(11) **EP 1 493 475 B1**
(45) Veröffentlichungstag und Bekanntmachung des Hinweises auf die Patenterteilung: **13.06.2007**
(21) Anmeldenummer: 04015447.8
(22) Anmeldetag: 01.07.2004
(51) Int. Cl.: B01D 3/20, B01D 3/00, B01J 8/18, B01J 8/22, B01J 8/34

(54) **Reaktor für gas/flüssig oder gas/flüssig/fest Reaktionen**
Reactor for gas/liquid or gas/liquid/solid reactions
Réacteur pour des réactions gaz/liquide ou gaz/liquide/solide

(30) Priorität: 01.07.2003 DE 10329491
(43) Veröffentlichungstag der Anmeldung: 05.01.2005
(73) Patentinhaber: BASF Aktiengesellschaft, 67056 Ludwigshafen (DE)
(72) Erfinder: Weinle, Werner, 74177 Bad Friedrichshall (DE); Bey, Oliver, 67150 Niederkirchen (DE); Zehner, Peter, 67071 Ludwigshafen (DE)
(74) Vertreter: Hörschler, Wolfram Johannes

(56) Entgegenhaltungen:
- EP-A- 0 736 485
- DE-A- 10 120 801
- FR-A- 2 707 183
- US-A- 3 394 927
- US-A- 4 097 243
- US-A- 4 322 384

## Beschreibung

Die Erfindung betrifft einen Reaktor für gas/flüssig oder gas/flüssigfest-Reaktionen sowie eine Verwendung.

In der chemischen Verfahrenstechnik werden häufig Reaktionen in gasförmig/flüssigen oder gasförmig/flüssigen/festen Phasen durchgeführt. Hierbei kann die gasförmige Phase beispielsweise ein Edukt, ein Reaktionshilfsstoff oder eine Kombination von beiden sein. Häufig wird dabei eine flüssige oder eine flüssig/feste Phase im Gegenstrom mit einer gasförmigen Phase durch einen Reaktor geleitet.

Ein derartiger Reaktor mit Gegenstromführung eines flüssigen oder flüssig/festen Eduktstroms und eines gasförmigen Stromes ist aus DE-A 101 20 801.4 bekannt. Dabei wird auch bei hohen Verweilzeiten oder flüssigen oder flüssig/festen Phase eine weitgehende Annäherung an das thermodynamische Gas/Flüssig-Gleichgewicht erreicht, indem durch die besondere konstruktive Ausgestaltung des Reaktors nach dem Mammutschlaufenprinzip eine ausgezeichnete Durchmischung der Phasen und nach erfolgter Durchmischung und Reaktion eine weitgehende Auftrennung von gasförmiger und flüssiger Phase gewährleistet wird.

Die besondere konstruktive Ausgestaltung des Reaktors der DE-A 101 20 801.4 umfasst
- mindestens zwei, in Längsrichtung übereinander angeordnete Kammern, wobei
- die Kammern voneinander durch flüssigkeitsdichte Böden getrennt sind,
- jede Kammer durch je einen Flüssigkeitsüberlauf mit der unmittelbar darunterliegenden Kammer verbunden ist und über den Flüssigkeitsüberlauf der untersten Kammer ein flüssiger Produktstrom abgezogen wird,
- der Gasraum oberhalb des Flüssigkeitsspiegels in jeder Kammer mit der jeweils unmittelbar darüber angeordneten Kammer durch ein oder mehrere Gaszuleitungsrohre verbunden ist, das (die) jeweils in einen Gasverteiler mit Öffnungen für den Gasaustritt unterhalb des Flüssigkeitsspiegels mündet,
- sowie mindestens ein um jeden Gasverteiler vertikal angeordnetes Leitblech, dessen oberes Ende unterhalb des Flüssigkeitsspiegels und dessen unteres Ende oberhalb des flüssigkeitsdichten Bodens der Kammer endet und das jede Kammer in einen oder mehrere begaste und in einen oder mehrere unbegaste Räume trennt.

Dadurch wird im Reaktor ohne bewegte Apparateteile, durch eine Air-Lift-Umwälzung der Flüssigkeit, auch als Mammutschlaufen-Prinzip bekannt, eine ausgezeichnete Durchmischung bei mehrphasigen Reaktionen und eine nahezu konstante Zusammensetzung des Reaktionsgemisches jeweils über das gesamte Volumen in jeder Kammer gewährleistet, das heißt sowohl über deren Querschnitt als auch insbesondere über die Flüssigkeitshöhe, bei gleichzeitig einfacher Auftrennung zwischen flüssiger und gasförmiger Phase nach erfolgter Reaktion.

Durch den Gasaustritt aus dem Gasverteiler in den Flüssigkeitsraum zwischen Gasverteiler und dem oder den um den Gasverteiler herum vertikal angeordneten Leitblech oder Leitblechen wird der hydrostatische Druck in diesem Flüssigkeitsraum gegenüber dem nicht begasten Flüssigkeitsraum abgesenkt, wodurch ein Druckgefälle entsteht, das in kinetische Energie umgesetzt wird. Dieses Druckgefälle setzt die Air-Lift-Umwälzung in Form einer Strömung in Gang, die im begasten Raum, das heißt im Raum zwischen dem Gasverteiler und dem oder den um den Gasverteiler herum angeordneten Leitblech (Leitblechen) nach oben gerichtet ist, im Bereich oberhalb des obersten Endes des Leitblechs (der Leitbleche) und unterhalb des Flüssigkeitsspiegels durch das Leitblech (die Leitbleche) umgelenkt wird, den nicht begasten Flüssigkeitsraum außerhalb des Leitblechs (der Leitbleche) von oben nach unten durchströmt und oberhalb des flüssigkeitsdichten Bodens der Kammer und unterhalb des untersten Endes des Leitblechs (der Leitbleche) erneut in eine von unten nach oben gerichtete Strömung umgelenkt wird, wodurch die Schlaufenbewegung geschlossen wird.

Es war demgegenüber Aufgabe der Erfindung, einen Reaktor für gas/flüssig oder gas/flüssig/fest-Reaktionen mit intensiver Phasendurchmischung nach dem Mammutschlaufenprinzip zur Verfügung zu stellen, der gegenüber dem Stand der Technik wirtschaftlicher ist, insbesondere durch die einfachere konstruktive Ausgestaltung des Gasverteilers und der darüber hinaus wenig anfällig für Betriebsstörungen durch Pulsationen ist.

Weiterhin soll der Reaktor durch einen modularen Aufbau des Gasverteilers flexibel an die konkreten Betriebsbedingungen anpassbar sein.

Die Lösung geht aus von einem Reaktor für gas/flüssig oder gas/flüssig/fest-Reaktionen mit vertikal ausgerichteter Längsachse, mit Zuführung eines flüssigen oder flüssig/festen Eduktstroms im oberen Bereich des Reaktors und eines gasförmigen Stromes im unteren Bereich des Reaktors mit
- einer oder mehreren, in Längsrichtung übereinander angeordneten Kammern, wobei
- jede Kammer nach unten durch einen flüssigkeitsdichten Boden begrenzt ist,
- jede Kammer durch je einen Flüssigkeitsüberlauf mit dem Reaktorinnenraum unterhalb des die Kammer begrenzenden flüssigkeitsdichten Bodens verbunden ist und über den Flüssigkeitsüberlauf der untersten Kammer ein flüssiger Produktstrom abgezogen wird,
- der Gasraum unterhalb jedes flüssigkeitsdichten Bodens mit der jeweils unmittelbar darüber angeordneten Kammer durch ein oder mehrere Gaszuleitungsrohre verbunden ist, das jeweils in ein Gasverteilermodul mit Öffnungen für den Gasaustritt unterhalb des Flüssigkeitsspiegels in der Kammer mündet,
- sowie mit jeweils mindestens einem um jedes Gasverteilermodul vertikal angeordneten Leitblech, dessen oberes Ende unterhalb des Flüssigkeitsspiegels und dessen unteres Ende oberhalb des flüssigkeitsdichten Bodens der Kammer endet und das jede Kammer in einen oder mehrere begaste und in einen oder mehrere unbegaste Räume trennt.

Die Erfindung ist dadurch gekennzeichnet, dass das Gasverteilermodul aus geraden Rohrstücken gebildet ist. Das heißt, das Gasverteilermodul enthält keine gebogenen oder gekrümmten Rohrteile.

Es wurde gefunden, dass es möglich ist, den Gasverteiler für einen Reaktor in konstruktiv einfacher Weise modular, aus geraden Rohrstücken, auszubilden. Hierbei können handelsübliche Rohre verwendet werden, die auf die erforderlichen Maße zugeschnitten werden.

Es ist nicht erforderlich, die einzelnen, das Gasverteilermodul bildenden Rohrstücke vollkommen gasdicht miteinander zu verbinden, ausreichend ist eine Verbindung, die mechanisch stabil ist.

Die Geometrie der einsetzbaren Rohre ist grundsätzlich nicht eingeschränkt. Es ist beispielsweise möglich, Rohrstücke einzusetzen, die Hohlzylinder mit kreisförmigem Querschnitt oder Rohrstücke, die Hohlzylinder mit viereckigem, insbesondere rechteckigem Querschnitt, sind.

Bevorzugt ist das Gasverteilermodul in der Weise ausgebildet, dass die Rohrstücke im rechten Winkel zueinander angeordnet sind.

Hierbei ist bevorzugt ein vertikales Rohrstück vorgesehen, das das obere Ende des Gaszuleitungsrohres umfasst und das zwei oder mehrere horizontale Rohrstücke angeschlossen sind, die bevorzugt symmetrisch gegenüber dem vertikalen Rohrstücke angeordnet sind.

Wie vorstehend bereits ausgeführt, muss die Verbindung der horizontalen Rohrstücke mit dem vertikalen Rohrstück nicht gasdicht ausgeführt sein, es ist lediglich erforderlich, dass sie mechanisch stabil ist.

Die Bestimmung, dass das vertikale Rohrstück das obere Ende des Gaszuleitungsrohres umfasst, bedeutet, dass es einen größeren Innendurchmesser gegenüber dem Außendurchmesser des Gaszuleitungsrohres aufweist und vom oberen Ende des Gaszuleitungsrohres beabstandet ist, dergestalt, dass das im Gaszuleitungsrohr aufsteigende Gas in das vertikale Rohrstück des Gasverteilermodules einströmen kann.

Das Gasverteilermodul ist mit seinem vertikalen Rohrstück an dessen unterem Ende vorzugsweise auf dem flüssigkeitsdichten Boden der Kammer aufgesetzt, wobei auch hier keine gasdichte Verbindung erforderlich ist, sondern lediglich eine mechanische Stabilisierung. Häufig wird das Gasverteilermodul am flüssigkeitsdichten Boden der Kammer angeheftet.

Am vertikalen Rohrstück sind ein, zwei oder mehrere horizontale Rohrstücke angeschlossen, die Öffnungen für den Gasaustritt aufweisen. Bevorzugt sind zwei oder mehrere horizontale Rohrstücke vorgesehen, die insbesondere symmetrisch gegenüber dem vertikalen Rohrstück angeordnet sind. Durch die symmetrische Anordnung der horizontalen Rohrstücke gegenüber dem vertikalen Rohrstück wird eine gleichmäßige Begasung in der Querschnittsebene erreicht.

Bevorzugt ist das vertikale Rohrstück aus einem Hohlzylinder mit kreisförmigem Querschnitt und die horizontalen Rohrstücke aus Hohlzylindern mit viereckigem, insbesondere rechteckigem Querschnitt, gebildet.

In einer bevorzugten Ausführung weist jedes Gasverteilermodul jeweils zwei horizontale Rohrstücke auf, die auf einer Geraden angeordnet sind. Somit ist das gesamte Gasverteilermodul weitgehend planar.

Es ist möglich, alle horizontalen Rohrstücke des Gasverteilermoduls jeweils auf gleiche Höhe anzuordnen. Es ist jedoch auch möglich, horizontale Rohrstücke auf zwei oder mehreren, voneinander beabstandeten Höhen, an dem vertikalen Rohrstück anzubringen.

Bevorzugt ist der Gasverteiler in der Weise ausgebildet, dass nach dem Einbau desselben in den Reaktor die horizontalen Rohrstücke vom Boden der Kammer beabstandet sind, bevorzugt um 40 bis 90 % der Flüssigkeitshöhe in der Kammer, gemessen vom Boden der Kammer bis zum Flüssigkeitsüberlauf. Durch diese besondere Ausgestaltung des Gasverteilers wird sowohl eine ausgezeichnete Durchmischung von Gas und Flüssigkeit bei gleichzeitig einfacher Auftrennung zwischen flüssiger und gasförmiger Phase nach erfolgter Reaktion erreicht, als auch gleichzeitig der Druckverlust für die durch den Reaktor von unten nach oben strömende Gasphase durch den geringeren hydrostatischen Gegendruck reduziert.

Die Öffnungen für den Gasaustritt sind in den horizontalen Rohrstücken bevorzugt in ein oder mehreren, insbesondere in zwei horizontalen Reihen, angeordnet. Es hat sich überraschend gezeigt, dass eine kreisförmige Geometrie der Öffnungen gegenüber schlitzförmigen Geometrien für die Reduzierung von Pulsationen im Betrieb des Reaktors vorteilhaft ist.

Es wurde gefunden, dass die um dass oder die Gasverteilermodule herum angeordneten Leitbleche bevorzugt eben ausgebildet sein sollen. Ebene Leitbleche sind insbesondere bei der vorstehend beschriebenen nahezu planaren Ausgestaltung der Gasverteilermodule vorteilhaft. Um eine Durchmischung nach dem Mammutschlaufenprinzip zu gewährleisten, müssen die Leitbleche in vertikaler Richtung vom Flüssigkeitsspiegel in der Kammer wie auch vom flüssigkeitsdichten Boden der Kammer beabstandet sein.

Die Abstände des Leitblechs oder der Leitbleche zur Flüssigkeitsoberfläche wie auch zum Boden der Kammer sind bevorzugt in der Weise festzulegen, dass sich die Strömungsgeschwindigkeit der Flüssigkeit bei der Umlenkung durch das Leitblech nicht oder nur geringfügig verändert, so dass im Wesentlichen keine Drosselung der Flüssigkeitsströmung durch das Leitblech erfolgt.

In einer besonders vorteilhaften Ausgestaltung sind die Gasverteilermodule auf dem flüssigkeitsdichten Boden der Kammer bzw. auf jedem flüssigkeitsdichten Boden, sofern der Reaktor mehrere Kammern aufweist, in Reihen angeordnet, wobei die horizontalen Rohrstücke der Gasverteilermodule jeder Reihe auf jeweils einer Geraden und die horizontalen Rohrstücke unterschiedlicher Reihen parallel zueinander angeordnet sind.

Dabei ist es möglich, dass sich die Enden der horizontalen Rohrstücke der Gasverteilermodule einer oder aller Reihen berühren oder auch miteinander verbunden sind oder dass dieselben voneinander beabstandet sind. Möglich sind auch andere Anordnungen der Gasverteilermodule auf dem flüssigkeitsdichten Boden der Kammer(n), beispielsweise eine radiale Anordnung.

Besonders vorteilhaft ist in der vorstehend beschriebenen Anordnung der Gasverteilermodule in parallelen Reihen in jeder Reihe von Gasverteilermodulen in der Ebene, die durch die horizontalen und die vertikalen Rohrstücke der Reihe definiert ist, jeweils ein Wehr angeordnet, das in vertikaler Richtung vom flüssigkeitsdichten Boden der Kammer bis oberhalb des Flüssigkeitsspiegels in der Kammer und in horizontaler Richtung jeweils an einem Ende bis zum Innenmantel des Reaktors reicht und am anderen Ende eine Durchtrittsöffnung für die Flüssigkeit freilässt, dergestalt, dass die Wehre unmittelbar aufeinander folgender Reihen von Gasverteilermodulen jeweils alternierend an einander gegenüberliegenden Seiten des Innenmantels des Reaktors Durchtrittsöffnungen für die Flüssigkeit freilassen.

Durch diese Anordnung der Wehre wird eine mäanderförmige Strömung der Flüssigkeit in der Kammer bewirkt. Dadurch wird verfahrenstechnisch ein Apparat zur Verfügung gestellt, der eine Vielzahl von hintereinander geschalteten jeweils ideal oder nahezu ideal rückvermischten Reaktionsstufen aufweist und somit eine Vielzahl von hintereinander geschalteten Rührkesseln entspricht, mit entsprechender Erhöhung der Kapazität.

Zur Stabilisierung der Konstruktion können in geeigneter Weise zwischen den Wehren Abstandhalter vorgesehen sein.

Im Modellversuch konnten für einen Reaktor mit einem Boden mit einem Durchmesser von 1 m durch den erfindungsgemäßen Einsatz von ausschließlich geraden Rohrstücken die Herstellungskosten um etwa ein Drittel gesenkt werden. Darüber hinaus traten keinerlei Gas-Pulsationen und kein Schwappen der Flüssigkeit auf.

Die Erfindung wird im Folgenden anhand einer Zeichnung näher erläutert. Es zeigen im Einzelnen:
- Figur 1A: einen Schnitt durch eine Kammer in der Ebene eines Gasverteilermoduls, mit Schnittdarstellung in eine senkrechten Ebene hierzu in Fig. 1B,
- Figur 2A: einen horizontalen Schnitt durch eine bevorzugte Ausführungsform eines Gasverteilermoduls, mit vertikaler Schnittdarstellung in Fig. 2B und dreidimensionaler Darstellung in Fig. 2C.

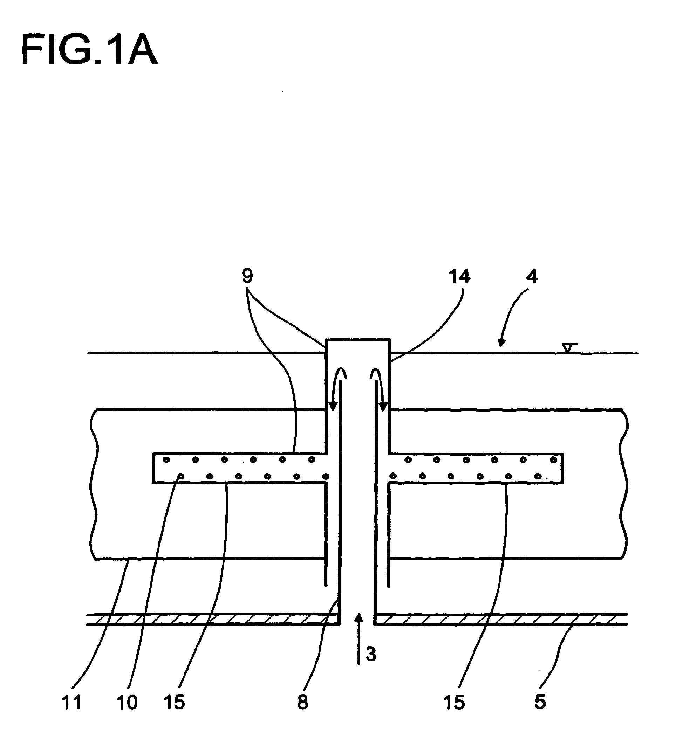

Die Schnittdarstellung in Fig. 1A in der Ebene eines Gasverteilermodules 9 in einer Kammer 4 zeigt die Zuleitung eines gasförmigen Stromes 3 über ein Gaszuleitungsrohr 8 durch den flüssigkeitsdichten Boden 5 einer Kammer 4. Am oberen Ende des Gaszuleitungsrohres 8 tritt der gasförmige Strom in das durch das vertikale, oben geschlossene Rohrstück 14 des Gasverteilermodules 9 umschlossenen Raum und strömt in die horizontalen Rohrstücke 15 des Gasverteilermodules 9, die mit Öffnungen 10 versehen sind, durch die das Gas in die auf dem flüssigkeitsdichten Boden 5 der Kammer 4 aufgestaute Flüssigkeit austritt. Um das Gasverteilermodul 9 ist ein Leitblech 11 angeordnet, das in der bevorzugten, in der Figur dargestellten Ausführungsform eben ist und das vom Flüssigkeitsspiegel in der Kammer 4 wie auch vom flüssigkeitsdichten Boden 5 der Kammer 4 beabstandet ist.

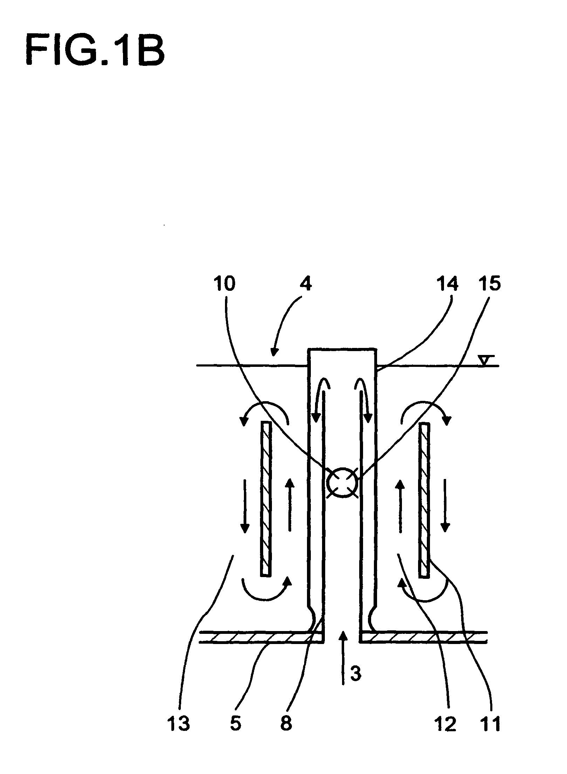

Aus der Schnittdarstellung in Fig. 1B, in einer Ebene senkrecht zur in Fig. 1A dargestellten Ebene ist durch die gebogenen Pfeile am oberen Ende des Gaszuleitungsrohres 8 der Gasaustritt in den Raum zwischen Gaszuleitungsrohr und vertikalem Rohrstück 14 des Gasverteilers 9, analog zur Darstellung in Fig. 1A, verdeutlicht. Darüber hinaus ist durch den aufsteigenden Pfeil im Raum zwischen vertikalem Rohrstück 14 des Gasverteilers und Leitblech 11, das heißt dem begasten Raum 12 und durch den absteigenden Pfeil im unbegasten Raum 13 außerhalb des Leitblechs 11 die durch den Gasstrom bewirkte Air-Lift-Umwälzung der Flüssigkeit angedeutet.

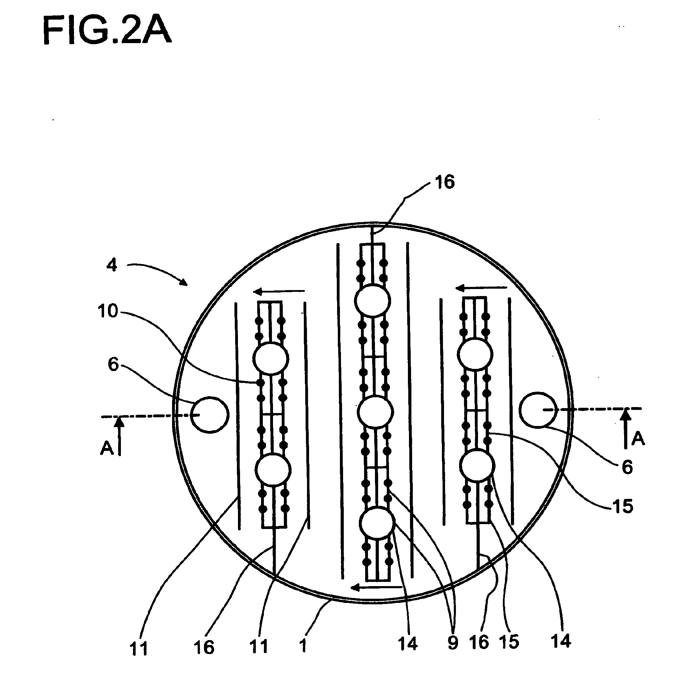

Fig. 2A zeigt einen horizontalen Schnitt durch eine Kammer 4 eines Reaktors 1 mit beispielhaft sieben, symmetrisch angeordneten Gasverteilermodulen 9, die jeweils ein vertikales Rohrstück 14 sowie zwei horizontale Rohrstücke 15 aufweisen, mit Öffnungen 10 für den Gasaustritt. Die sieben Gasverteilermodule 9 sind in drei Reihen angeordnet, wobei die horizontalen Rohrstücke 15 der Gasverteilermodule 9 jeder Reihe in Fortsetzung zueinander angeordnet sind. Die Flüssigkeitsüberläufe sind mit der Bezugsziffer 6 bezeichnet. Um die Gasverteiler herum sind ebene Leitbleche 11 angeordnet und in jeder Reihe der Gasverteilermodule 9, in der Ebene derselben, jeweils Wehre 16, die alternierend an der Innenwand des Reaktors 1 Durchtrittsöffnungen freilassen. Dadurch wird eine mäanderförmige Strömung des flüssigen Reaktionsgemisches in der Kammer 4 erzwungen, wie in Fig. 2A schematisch durch die Pfeile dargestellt.

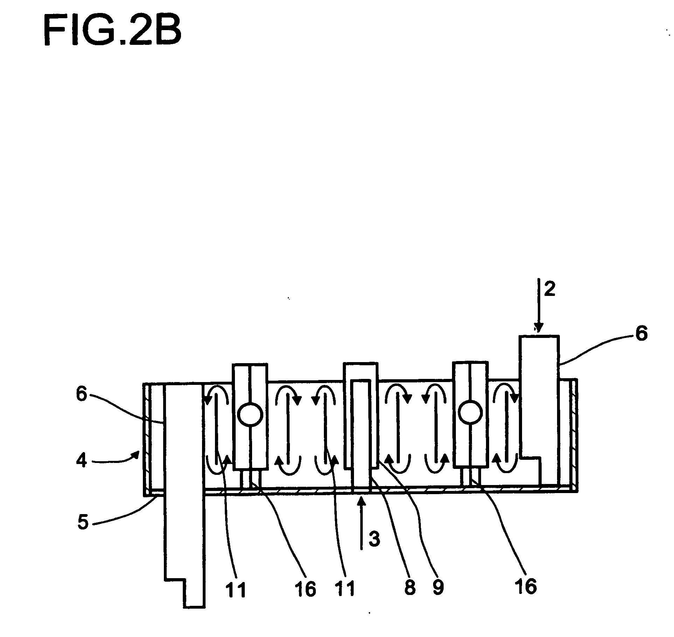

Der vertikale Schnitt in der Ebene A-A in Fig. 2B zeigt ebenfalls die Flüssigkeitsüberläufe 6 für das flüssige oder flüssig/feste Reaktionsgemisch 2, ein Gaszuleitungsrohr 8 für den gasförmigen Strom 3, wie es für jedes Gasverteilermodul 9 vorgesehen ist, jedoch durch die in Fig. 2B dargestellte Schnittführung nur für das zentral angeordnete Gasverteilermodul 9 zu sehen ist. Die Bezugsziffer 11 bezeichnet die ebenen Leitbleche, die um die Gasverteilermodule 9 herum angeordnet sind, und die eine interne, vertikal ausgerichtete Schlaufenbewegung des Reaktionsgemisches bewirken, wie in Fig. 2B durch die gekrümmten Pfeile schematisch dargestellt. Die Wehre 16 sind jeweils in der Ebene der Gasverteiler 9 angeordnet.

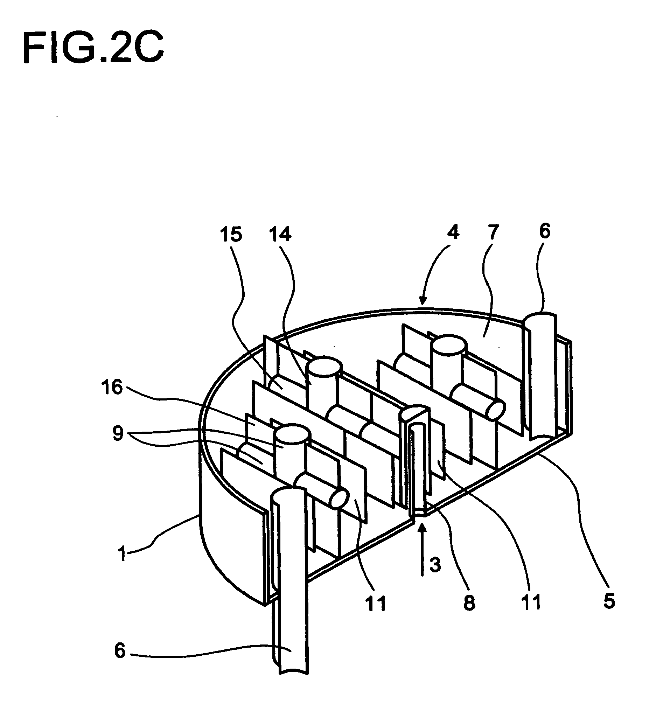

Die dreidimensionale Darstellung in Fig. 2C verdeutlicht die Anordnung der Gasverteiler 9, mit vertikalen Rohrstücken 14 und horizontalen Rohrstücken 15 in der Kammer 4 des Reaktors 1 mit flüssigkeitsdichtem Boden 5 und Flüssigkeitsüberläufen 6. Die Bezugsziffer 7 bezeichnet den Gasraum oberhalb des Flüssigkeitsspiegels in der Kammer 4. Die dreidimensionale Darstellung in Fig. 2C verdeutlicht die Anordnung der Gaszuleitungsrohre 8 für die Zuführung des gasförmigen Stromes 3 in das vertikale, oben geschlossene Rohrstück 14 der Gasverteiler 9, sowie die Anordnung der ebenen Leitbleche 11 und der ebenen Wehre 16.

## Patentansprüche

1. Reaktor (1) für gas/flüssig oder gas/flüssig/fest-Reaktionen mit vertikal ausgerichteter Längsachse, mit Zuführung (2) eines flüssigen oder flüssig/festen Eduktstroms im oberen Bereich des Reaktors und eines gasförmigen Stromes (3) im unteren Bereich des Reaktors (1) mit
- einer oder mehreren, in Längsrichtung übereinander angeordnete Kammern (4), wobei
- jede Kammer (4) nach unten durch einen flüssigkeitsdichten Boden (5) begrenzt ist,
- jede Kammer (4) durch je einen Flüssigkeitsüberlauf (6) mit dem Reaktorinnenraum unterhalb des die Kammer begrenzenden flüssigkeitsdichten Bodens (5) verbunden ist und über den Flüssigkeitsüberlauf (6) der untersten Kammer (4) ein flüssiger Produktstrom abgezogen wird,
- der Gasraum (7) unterhalb jedes flüssigkeitsdichten Bodens mit der jeweils unmittelbar darüber angeordneten Kammer (4) durch ein oder mehrere Gaszuleitungsrohre (8) verbunden ist, das jeweils in ein Gasverteilermodul (9) mit Öffnungen (10) für den Gasaustritt unterhalb des Flüssigkeitsspiegels in der Kammer (4) mündet,
- sowie mit jeweils mindestens einem um jedes Gasverteilermodul (9) vertikal angeordneten Leitblech (11), dessen oberes Ende unterhalb des Flüssigkeitsspiegels und dessen unteres Ende oberhalb des flüssigkeitsdichten Bodens (5) der Kammer (4) endet und das jede Kammer (4) in einen oder mehrere begaste (12) und in einen oder mehrere unbegaste (13) Räume trennt,
**dadurch gekennzeichnet, dass** das Gasverteilermodul (9) aus geraden Rohrstücken (14, 15) gebildet ist.

2. Reaktor (1) nach Anspruch 1, **dadurch gekennzeichnet, dass** die Rohrstücke (14, 15) Hohlzylinder mit kreisförmigem Querschnitt sind.

3. Reaktor (1) nach Anspruch 1 oder 2, **dadurch gekennzeichnet, dass** die Rohrstücke (14, 15) im rechten Winkel zueinander angeordnet sind.

4. Reaktor (1) nach einem der Ansprüche 1 bis 3, **dadurch gekennzeichnet, dass** jedes Gasverteilermodul (9) aus einem vertikalen Rohrstück (14) gebildet ist, das jeweils das obere Ende des Gaszuleitungsrohres (8) umfasst und an das ein, zwei oder mehrere horizontale Rohrstücken (15) angeschlossen sind, die Öffnungen (10) für den Gasaustritt aufweisen.

5. Reaktor (1) nach Anspruch 4, **dadurch gekennzeichnet, dass** jedes Gasverteilermodul (9) zwei oder mehrere horizontale Rohrstücke (15) aufweist, die bevorzugt symmetrisch gegenüber dem vertikalen Rohrstück (14) angeordnet sind.

6. Reaktor (1) nach Anspruch 4 oder 5, **dadurch gekennzeichnet, dass** das vertikale Rohrstück (14) ein Hohlzylinder mit kreisförmigem Querschnitt und dass das horizontale Rohrstück (15) oder die horizontalen Rohrstücke (15) Hohlzylinder mit viereckigem, insbesondere rechteckigem Querschnitt, sind.

7. Reaktor (1) nach Anspruch 4 oder 5, **dadurch gekennzeichnet, dass** jedes Gasverteilermodul (9) jeweils zwei horizontale Rohrstücke (15) aufweist, die auf einer Geraden angeordnet sind.

8. Reaktor (1) nach einem der Ansprüche 4 bis 7, **dadurch gekennzeichnet, dass** alle horizontalen Rohrstücke (15) auf jeweils gleicher Höhe angeordnet sind.

9. Reaktor (1) nach einem der Ansprüche 4 bis 8, **dadurch gekennzeichnet, dass** das oder die horizontalen Rohrstücke (15) vom Boden (5) der Kammer (4) beabstandet ist (sind), bevorzugt um 40 % bis 90 % der Flüssigkeitshöhe in der Kammer (4), gemessen vom Boden (5) der Kammer (4) bis zum Flüssigkeitsüberlauf.

10. Reaktor (1) nach einem der Ansprüche 4 bis 9, **dadurch gekennzeichnet, dass** die Öffnungen (10) für den Gasaustritt im horizontalen Rohrstück (15) oder in den horizontalen Rohrstücken (15) in einer oder mehreren horizontalen Reihen angeordnet sind.

11. Reaktor (1) nach einem der Ansprüche 1 bis 10, **dadurch gekennzeichnet, dass** die Leitbleche (11) eben sind.

12. Reaktor (1) nach einem der Ansprüche 1 bis 11, **dadurch gekennzeichnet, dass** die Gasverteilermodule (9) auf jedem flüssigkeitsdichten Boden (5) in Reihen angeordnet sind, wobei die horizontalen Rohrstücke (15) der Gasverteilermodule (9) jeder Reihe auf jeweils einer Geraden und die horizontalen Rohrstücke (15) unterschiedliche Reihen parallel zueinander angeordnet sind.

13. Reaktor (1) nach Anspruch 12, **dadurch gekennzeichnet, dass** in jeder Reihe von Gasverteilermodulen (9) in der Ebene, die durch die horizontalen Rohrstücke (15) und die vertikalen Rohrstücke (14) definiert ist, jeweils ein Wehr (16) angeordnet ist, das in vertikaler Richtung vom flüssigkeitsdichten Boden (5) der Kammer (4) bis oberhalb des Flüssigkeitsspiegels in der Kammer (4) und in horizontaler Richtung jeweils an einem Ende des vom Innenmantel des Reaktors (1) reicht und am anderen Ende eine Durchtrittsöffnung für die Flüssigkeit freilässt, dergestalt, dass die Wehre (16) unmittelbar aufeinander folgende Reihen von Gasverteilermodulen (9) jeweils alternierend an einander gegenüberliegenden Seiten des Innenmantels des Reaktors (1) Durchtrittsöffnungen für die Flüssigkeit freilassen.

## Claims

1. A reactor (1) for gas/liquid or gas/liquid/solid reactions having a vertical longitudinal axis and an inlet (2) for a liquid or liquid/solid feed stream in the upper region of the reactor and an inlet (3) for a gaseous stream in the lower region of the reactor (1), comprising
- one or more chambers (4) arranged above one another in the longitudinal direction, where
- each chamber (4) is bounded at the bottom by a liquid-tight bottom plate (5),
- each chamber (4) is connected via a liquid overflow (6) to the interior space of the reactor below the liquid-tight bottom plate (5) bounding the chamber and a liquid product stream is taken off via the liquid overflow (6) of the bottommost chamber (4),
- the gas space (7) below each liquid-tight bottom plate is connected to the chamber (4) located immediately above it by one or more gas inlet tubes (8) which opens (each open) into a gas distributor module (9) provided with openings (10) for exit of gas below the liquid surface in the chamber (4),
- and each chamber (4) is provided with at least one guide plate (11) which is arranged vertically around each gas distributor module (9) and whose upper end is below the liquid surface and whose lower end is above the liquid-tight bottom plate (5) of the chamber (4) and which divides each chamber (4) into one or more spaces into which gas flows (12) and one or more spaces into which gas does not flow (13),
wherein the gas distributor module (9) is made up of straight tube sections (14, 15).

2. The reactor (1) according to claim 1, wherein the tube sections (14, 15) are hollow cylinders having a circular cross section.

3. The reactor (1) according to claim 1 or 2, wherein the tube sections (14, 15) are arranged at right angles to one another.

4. The reactor (1) according to any of claims 1 to 3, wherein each gas distributor module (9) is formed by a vertical tube section (14) which in each case comprises the upper end of the gas inlet tube (8) and to which one, two or more horizontal tube sections (15) which have openings (10) for exit of gas are connected.

5. The reactor (1) according to claim 4, wherein each gas distributor module (9) has two or more horizontal tube sections (15) which are preferably arranged symmetrically around the vertical tube section (14).

6. The reactor (1) according to claim 4 or 5, wherein the vertical tube section (14) is a hollow cylinder having a circular cross section and the horizontal tube section (15) or the horizontal tube sections (15) is/are a hollow cylinder/hollow cylinders having a four-sided, in particular rectangular, cross section.

7. The reactor (1) according to claim 4 or 5, wherein each gas distributor module (9) has two horizontal tube sections (15) which are arranged in a straight line.

8. The reactor (1) according to any of claims 4 to 7, wherein all horizontal tube sections (15) are arranged at the same height.

9. The reactor (1) according to any of claims 4 to 8, wherein the horizontal tube section or sections (15) is (are) located at a distance from the bottom plate (5) of the chamber (4), preferably at a distance of from 40% to 90% of the height of liquid in the chamber (4), measured from the bottom plate (5) of the chamber (4) to the liquid overflow.

10. The reactor (1) according to any of claims 4 to 9, wherein the openings (10) for the exit of gas in the horizontal tube section (15) or horizontal tube sections (15) are arranged in one or more horizontal rows.

11. The reactor (1) according to any of claims 1 to 10, wherein the guide plates (11) are flat.

12. The reactor (1) according to any of claims 1 to 11, wherein the gas distributor modules (9) are arranged in rows on each liquid-tight bottom plate (5) and the horizontal tube sections (15) of the gas distributor modules (9) of each row are arranged in a straight line and the horizontal tube sections (15) of different rows are arranged parallel to one another.

13. The reactor (1) according to claim 12, wherein a weir (16) is arranged in each row of gas distributor modules (9) in the plane defined by the horizontal tube sections (15) and the vertical tube sections (14) and the weir (16) in each case extends in the vertical direction from the liquid-tight bottom plate (5) of the chamber (4) to above the liquid surface in the chamber (4) and in the horizontal direction extends at one end to the interior wall of the reactor (1) while a passage for the liquid is left free at the other end, in such a way that the weirs (16) of adjacent rows of gas distributor modules (9) leave passages for the liquid free alternately on opposide sides of the interior wall of the reactor (1).

## Revendications

1. Réacteur (1) pour des réactions gaz/liquide ou gaz/liquide/solide à axe longitudinal orienté verticalement, avec une conduite d'amenée (2) d'un courant de produits de départ liquide ou liquide/solide dans la section supérieure du réacteur et d'un courant gazeux (3) dans la section inférieure du réacteur (1) avec:
- une ou plusieurs chambres (4) agencées superposées dans la direction longitudinale, où
- chaque chambre (4) est délimitée vers le bas par un plateau (5) étanche aux liquides,
- chaque chambre (4) est reliée à chaque fois par un trop-plein de liquide (6) à l'espace intérieur de réacteur en dessous du plateau (5) étanche aux liquides délimitant la chambre et un courant de produit liquide est soutiré par le trop-plein de liquide (6) de la chambre la plus inférieure (4),
- la chambre à gaz (7) en dessous de chaque plateau étanche aux liquides est reliée à la chambre (4) agencée à chaque fois directement au-dessus par un ou plusieurs tuyaux de conduite de gaz (8), qui débouche chaque fois dans un module de répartition du gaz (9) ayant des orifices (10) pour la sortie du gaz en dessous de la surface de liquide dans la chambre (4),
- ainsi qu'avec chaque fois au moins une tôle de guidage (11) agencée à la verticale autour de chaque module de répartition du gaz (9) et dont l'extrémité supérieure s'arrête en dessous de la surface de liquide et l'extrémité inférieure, au-dessus du plateau étanche aux liquides (5) de la chambre (4), et qui sépare chaque chambre (4) en un ou plusieurs espaces recevant du gaz (12) et un ou plusieurs qui n'en reçoivent pas (13),
**caractérisé en ce que** le module de répartition du gaz (9) est formé en pièces tubulaires droites (14, 15).

2. Réacteur (1) selon la revendication 1, **caractérisé en ce que** les pièces tubulaires (14, 15) sont des cylindres creux avec coupe circulaire.

3. Réacteur (1) selon la revendication 1 ou 2, **caractérisé en ce que** les pièces tubulaires (14, 15) sont agencées en angle droit l'une par rapport à l'autre.

4. Réacteur (1) selon l'une des revendications 1 à 3, **caractérisé en ce que** chaque module de répartition du gaz (9) est constitué d'une pièce tubulaire (14) verticale, laquelle chaque fois comprend l'extrémité supérieure du tuyau de conduite de gaz (8) et à laquelle une pièces tubulaires horizontales (15), deux, ou plus, sont raccordées, qui présentent des orifices (10) pour la sortie de gaz.

5. Réacteur (1) selon la revendication 4, **caractérisé en ce que** chaque module de répartition du gaz (9) présente deux pièces tubulaires (15) horizontales, ou plus, qui sont de préférence agencées symétriquement par rapport à la pièce tubulaire verticale (14).

6. Réacteur (1) selon la revendication 4 ou 5, **caractérisé en ce que** la pièce tubulaire verticale (14) est un cylindre creux avec coupe circulaire et **en ce que** la pièce tubulaire horizontale (15) ou les pièces tubulaires horizontales (15) sont des cylindres creux avec coupe carrée, en particulier coupe à angle droit.

7. Réacteur (1) selon la revendication 4 ou 5, **caractérisé en ce que** chaque module de répartition du gaz (9) présente chaque fois deux pièces tubulaires horizontales (15), agencées sur une droite.

8. Réacteur (1) selon l'une des revendications 4 à 7, **caractérisé en ce que** toutes les pièces tubulaires horizontales (15) sont chacune agencées à même hauteur.

9. Réacteur (1) selon l'une des revendications 4 à 8, **caractérisé en ce que** la ou les pièces tubulaires horizontales (15) est (sont) à partir du fond (5) de la chambre (4), situé(es) de préférence à 40% à 90% de la hauteur du liquide dans la chambre (4), mesuré du fond (5) de la chambre (4) jusqu'au trop-plein de liquide.

10. Réacteur (1) selon l'une des revendications 4 à 9, **caractérisé en ce que** les orifices (10) de sortie du gaz dans la pièce tubulaire horizontale (15) ou dans les pièces tubulaires horizontales (15) sont agencées en une ou plusieurs rangées horizontales.

11. Réacteur (1) selon l'une des revendications 1 à 10, **caractérisé en ce que** les tôles de guidage (11) sont au même niveau.

12. Réacteur (1) selon l'une des revendications 1 à 11, **caractérisé en ce que** les modules de répartition du gaz (9) sont agencés sur chaque plateau (5) étanche aux liquides en rangées, les pièces tubulaires horizontales (15) des modules de répartition du gaz (9) de chaque série étant agencées chaque fois sur une droite et les pièces tubulaires horizontales (15) de rangées différentes l'étant en parallèle l'une à l'autre.

13. Réacteur (1) selon la revendication 12, **caractérisé en ce que** dans chaque série des modules de répartition du gaz (9) au niveau qui est défini par les pièces tubulaires horizontales (15) et les pièces tubulaires verticales (14), est chaque fois agencé un déversoir (16) qui, en direction verticale du plateau étanche aux liquides (5) de la chambre (4), va jusqu'au-dessus de la surface de liquide dans la chambre (4) et en direction horizontale, chaque fois sur une extrémité, jusqu'à la chemise intérieure du réacteur, et à l'autre extrémité laisse une ouverture de passage ouverte pour le liquide, de telle façon que les déversoirs (16) de rangées directement successives de modules de répartition du gaz (9) chaque fois en alternance sur les côtés opposés de la chemise intérieure du réacteur (1) laissent des ouvertures de passage pour le liquide ouvertes.
